# EUROPEAN PATENT APPLICATION

(11) **EP 3 674 018 A1**
(43) Date of publication of application: **01.07.2020**
(21) Application number: 19219854.7
(22) Date of filing: 27.12.2019
(51) Int. Cl.: B22F 3/105, B22F 3/16, B22F 3/18, B23K 9/04, B23K 9/32, B23K 10/02, B23K 26/00, B23K 26/342, B33Y 10/00, B33Y 30/00, B33Y 40/20, B23P 6/00, B23P 9/02, B23P 23/04, B22F 3/24

(54) **METHOD FOR CONTROLLING DEFORMATION AND PRECISION OF PARTS IN PARALLEL DURING ADDITIVE MANUFACTURING PROCESS**

(30) Priority: 29.12.2018 CN 201811635163; 10.12.2019 CN 201911258975
(71) Applicant: Huazhong University of Science and Technology, Wuhan Hubei 430074 (CN)
(72) Inventor: Zhang, Haiou, Wuhan Hubei 430070 (CN); Wang, Guilan, Wuhan Hubei 430070 (CN)
(74) Representative: Hellmich, Wolfgang

(57) **Abstract**

The present invention discloses a method for controlling deformation and precision of a part in parallel during an additive manufacturing process, which belongs to an additive manufacturing field. During the additive manufacturing part process, performing steps of: performing additive forming and isomaterial shaping or plastic forming in parallel at a same station, and simultaneously, performing one or more members selected from a group consisting of isomaterial orthopedic process, subtractive process and finishing process in parallel at a same station, so as to achieve a one-step ultra-short process, high-precision and high-performance additive manufacturing. Performing in parallel at the same station refers to simultaneously implement different processes in a same pass or different passes of different processing layers or a same processing layer when a clamping position of the part to be processed is unchanged. The method can realize the one-step high-precision and high-performance additive manufacturing which has the ultra-short process, has high processing precision, and the parts can be directly applied, so that the method has strong practical application value.

## Description

### BACKGROUND OF THE PRESENT INVENTION

### Field of Invention

The present invention relates to the field of additive manufacturing technology, and more particularly to a method for controlling deformation and precision of parts in parallel during additive manufacturing process.

### Description of Related Art

The patternless fused deposition modeling of high-density metal parts or molds includes high-power laser fused deposition modeling, electron beam freeform fabrication, and plasma arc and electric arc fused deposition modeling.

The high-power laser fused deposition modeling uses the high-power laser to melt metal powders which are sent to the substrate layer by layer, and then performs rapid solidification for fused deposition modeling, thereby finally obtaining a near net shape formed part. For this method, the forming precision is high, the density of the workpiece is much higher than that of selective laser sintered parts; and however, the forming efficiency, and utilization of energy and materials are not high. Therefore, it is difficult for this method to reach full density. In addition, this method has high equipment investment and operating cost.

The electron beam freeform fabrication uses the high-power electron beam to melt the powder material, applies an electromagnetic field according to a computer model, controls the movement of the electron beam, and scans layer by layer till the complete of the whole part forming. For this method, the forming precision is high, the forming quality is good; and however, process conditions need to be controlled strictly, for example, the entire forming process needs to be carried out in vacuum, which results in limited forming dimensions, high equipment investment and high operating cost. Moreover, it is difficult for this method to be applied to form the part which is made from functionally gradient materials due to the manner of powder coating layer by layer as same as selective sintering.

The plasma arc or electric arc fused deposition modeling uses the highly compressed and clustered plasma beam to melt metal powders or wires which are synchronously supplied, and performs fused deposition modeling layer by layer on the substrate, so as to form the metal part or mold. Compared with the former two methods, this method has higher forming efficiency and material utilization, is easy to obtain higher density and lower equipment and running cost; and however, this method has larger diameter of the arc column, smaller forming dimensions and lower surface precision. Therefore, in this method, finishing is mostly performed after forming, which is similar to the high-power laser fused deposition modeling.

Therefore, a combined patternless rapid manufacturing method of plasma arc or electric arc fused deposition modeling and milling has emerged, in which a plasma beam is used as a forming heat source; in the layered or segmented fused deposition modeling, the fused deposition modeling and the numerical control milling finishing are sequentially alternately performed, so as to achieve short-process low-cost direct and accurate manufacturing.

Among the above three methods, the high-power laser fused deposition modeling and the plasma arc or electric arc fused deposition modeling are supportless, patternless fused deposition modeling for parts made from homogeneous or composite functionally gradient materials. Compared with supported patternless deposition forming such as power-coating type electron beam freeform fabrication, selective laser sintering/melting, and LOM (Laminated Object Manufacturing), SLA (Stereolithography Apparatus), FDM (Fused Deposition Modeling) and SLS (Selective Laser Sintering) all of which uses paper, resin and plastic with low melting point, the supportless patternless fused deposition modeling avoids many disadvantages in materials, processes and equipment caused by the need to add and remove support materials due to the need for support during forming, reduces manufacturing time and cost, and can form parts made from gradient functional materials. However, at the same time, due to the lack of support, in the process of forming complex shaped parts with cantilevers, the molten material may fall and flow under the action of gravity, which results in difficult fused deposition modeling.

The combined patternless rapid manufacturing method of plasma arc or electric arc fused deposition modeling and milling reduces the processing complexity by forming layer by layer and milling finishing, and however, for the complex shaped parts with large inclination angles on the side, especially transverse overhangs, the flow and even drop caused by gravity during deposition are still unavoidable, which results in difficult transverse forming.

Compared with laser powder feeding forming which uses power materials, heat source fused deposition modeling, such as gas or vacuum protected plasma arc / electric arc fused deposition modeling which uses filamentous or banded materials, vacuum-protected electron beam freeform fabrication, and slag-protected electroslag welding and submerged arc welding fused deposition modeling, has the advantages of being able to form more complex shapes, higher fused deposition efficiency and lower cost. However, for complex thin, thin-walled parts, due to their thicker arc pillars, the forming precision is poorer. As a result, the manufacturing application of the complex thin, thin-walled parts is limited.

However, deformation due to heat accumulation caused by multi-layer fused deposition is unavoidable. For some complex shaped and large parts, the above methods will produce large deformations. If the deformation is severe, it is difficult to continue to perform the fused deposition modeling; or even if the formed part is obtained, it may be scrapped due to excessive deformation and excessive size. Therefore, at present, the required machining allowances can only be estimated through prediction; and after the complete of forming, these allowances are removed to obtain the parts with the required size and precision. However, during the forming process, trial and correction must be continued to performed, so as to keep the deformation within the range required by dimensional precision. For complex shaped parts, when the deformation is difficult to be predicted, the machining allowance is often increased for insurance purposes, which inevitably leads to an increase in subsequent removals, reduced efficiency, and increased cost.

On the other hand, in the existing additive manufacturing methods, the formed part is generally unloaded and clamped at the forming station, moved to the processing unit for processing, and the processed part is then moved to the heat treatment unit for heat treatment to eliminate residual stress and deformation of the part, so as to prevent cracking and improve performance, resulting in long processes, low efficiency and high cost.

For cutting-edge technology, aerospace, shipbuilding, high-speed rail, weapons and other industries, which not only require good structural performance and stability of parts, but also has high requirements for size and precision, the above problems are particularly prominent and have become the key technical difficulties and bottlenecks that need to be solved, restrict the further development of fused deposition direct additive forming technology in these industries and realize industrialized applications.

### SUMMARY OF THE PRESENT INVENTION

In view of the above defects or improvement requirements of the prior art, the present invention provides a method for controlling deformation and precision of parts in parallel during an additive manufacturing process. An object of the present invention is to simultaneously implement different processes in the same pass or different passes of different processing layers or the same processing layer when the clamping position of the part to be processed is unchanged, thereby realizing the one-step high-precision and high-performance additive manufacturing which has the ultra-short process.

To achieve the above object, the present invention provides a method for controlling deformation and precision of a part in parallel during an additive manufacturing process, which comprises steps of: performing additive forming and isomaterial shaping or plastic forming in parallel at the same station, and simultaneously, performing one or more members selected from a group consisting of isomaterial orthopedic process, subtractive process and finishing process in parallel at the same station, so as to achieve the one-step ultra-short process, high-precision and high-performance additive manufacturing.

Performing in parallel at the same station refers to simultaneously implement different processes in the same pass or different passes of different processing layers or the same processing layer when the clamping position of the part to be processed is unchanged. After performing additive forming and isomaterial shaping or plastic forming, if performances of the part do not meet expected requirements, the isomaterial orthopedic process needs to be performed.

The method further comprises a step of performing followed-up controlled rolling and controlled cold heat treatment for controlling deformation and improving performance, so that through controlling process parameters such as temperature, degree of deformation, rate of deformation, and cooling conditions during the plastic forming, mechanical properties of a formed body are improved, the residual stress and deformation are reduced, and the forming precision is improved.

Further, the subtractive process or the finishing process is specifically simultaneous and follow-up milling by laser, electromachining or ultrasound.

Further, in the interval between the additive forming process of different processing layers, surface defects in the fused deposition modeling zone are cleaned up in a follow-up cleaning manner, so as to obtain a substrate surface or a part surface with good quality which is conducive to high-quality fused deposition modeling of a next pass.

The method further comprises after performing additive forming and plastic forming or isomaterial orthopedic process, in the forming processing unit, performing heat treatment on the formed body or the part, so as to remove residual stress thereof, reduce deformation and cracking, and improve mechanical properties.

The method further comprises through using a numerical control system of the manufacturing equipment, and an inverse device and a defect detection device connected with the manufacturing equipment, inversely calculating the shape and size of the formed body in parallel, and performing internal and external defect detection on blind areas which are complex in shape and are difficult to perform defect detection after the complete of forming; when there are defects, removing the defects with a reduction system and then continuously forming, wherein after completing the forming, the same method can also be adopted to perform defect detection on parts at the same station in the manufacturing equipment as required.

Further, different processes are implemented at different positions in the same pass or different passes of different processing layers or the same processing layer.

Further, the process parameters such as temperature, degree of deformation, rate of deformation, and cooling conditions during the plastic forming process are controlled, which is assisted by electromagnetic or ultrasonic vibration.

A plasma fused deposition gun using gas tungsten arc welding is adopted as the heat source for additive forming, a micro roll moves synchronously with the plasma fused deposition gun, the micro roll for plastic forming is applied to a surface of a freshly post-solidification zone of a molten pool in situ. A fused deposition current of the plasma fused deposition gun is 180 A. According to performance requirements of a forging mold cavity to be fused and deposited, a mold steel welding wire is used, micro-casting fused deposition additive forming and micro-forging plastic forming are performed simultaneously layer by layer in accordance with a digital forming processing path obtained from a three-dimensional CAD (computer-aided design) model of the mold on a substrate. Through the follow-up controlled rolling and controlled cold heat treatment, in the process of additive forming and plastic forming, air cooling is changed to gas cooling or liquid nitrogen cooling; or in the forming process, electromagnetism is applied to the molten pool for auxiliary forming. If the shape of the mold cavity is complex, it is necessary to perform contactless laser milling on the surface of the formed body to be processed during the above-mentioned synchronous forming process. If during the above-mentioned synchronous forming process, the size and surface precision of the formed body still cannot meet the requirements due to the short time, mechanical finishing is able to be performed in a manner of layer by layer or segmented composition of several layers. The finishing process is synchronized with the synchronous forming process till the complete of mold cavity forming.

Further, if the precision does not meet the requirements, the above manner, mechanical milling or grinding finishing is able to be continuously adopted till the precision of parts meet the requirement.

Further, a gas-protected laser fused deposition gun is adopted as a heat source for additive fused deposition forming, a micro roll moves synchronously with the gas-protected laser fused deposition gun, impact forming laser for plastic forming is applied to a surface of a post-solidification zone of a molten pool. A power of the gas-protected laser fused deposition gun is 2000 W. According to the performance requirements of an aircraft engine case to be additively manufactured, a superalloy wire is used, fused deposition modeling and micro-plastic forming are performed simultaneously layer by layer in accordance with a digital forming processing path obtained from a three-dimensional CAD model of parts on a substrate. Due to the large size of the case, the deformation of fused deposition modeling is large. Therefore, the isomaterial orthopedic process needs to be performed after the synchronous forming process described above. This isomaterial orthopedic process is performed followed by the laser impact forming till the complete of parts forming so as to correct the deformation to the minimum. Or ultrasonic vibrations are applied to a formed area for auxiliary forming during the forming process so as to improve microstructure and properties and reduce residual stress. If the shape of the component is complex, it is necessary to perform contactless laser milling during the above-mentioned synchronous forming process, or perform intermittent contact ultrasonic machining, or perform the above process or mechanical finishing in a manner of segmented composition of several layers on the parts that are difficult to be processed after the whole forming. The finishing process is synchronized with the synchronous forming process till the complete of part forming.

Further, a composite of electric arc or plasma arc of a gas tungsten arc welding gun and laser is adopted as a heat source for additive forming, a micro roll moves synchronously with a composite heat source generator, the micro roll for isomaterial shaping is applied to a surface of a post-solidification zone of a molten pool. A fused deposition current of the gas-protected electric arc or plasma arc fused deposition gun is 200 A and a laser power thereof is 2000 W. According to the performance requirements of an aircraft frame beam to be additively manufactured, a titanium alloy welding wire is used, fused deposition modeling and micro-plastic forming are performed simultaneously layer by layer in accordance with a digital forming processing path obtained from a three-dimensional CAD model of parts on a substrate. Due to the large size of the aircraft frame beam, the deformation of fused deposition modeling is large. Therefore, the isomaterial orthopedic process needs to be performed after the synchronous forming process described above. This isomaterial orthopedic process is performed followed by the micro-plastic forming till the complete of parts forming so as to correct the deformation to the minimum. However, due to the high performance requirements of aeronautical parts, oxides and impurities on the surface of each layer are not allowed to be brought into a lower forming body. Therefore, oxides, impurities and defects on the surface of the fused deposition modeling zone during additive forming are required to be cleaned up in a high-efficiency follow-up cleaning manner, so as to obtain a substrate surface or a part surface with good quality which is conducive to high-quality fused deposition modeling of a next pass. The surface cleaning is synthesized with the forming process till the complete of part forming.

A solid-state laser with a power of 2000 W is adopted, a superalloy wire is used as a forming material, a micro roll fixed on a laser head moves synchronously with the laser head, a side vertical roll follows a side of a melt softening zone, a perforated horizontal roll flexibly tracks a semi-solidified softened area near a back of a molten pool; according to a digital forming processing path obtained from a three-dimensional CAD (computer-aided design) model of oil pipe fittings on a substrate, laser fused deposition modeling and micro-forced forming are performed simultaneously on superalloy parts layer by layer. A heat treatment device located in a forming processing unit is used to perform heat treatment on the formed parts or components after the complete of all forming processes, so as to remove residual stresses, reduce deformation and cracking, and improve mechanical properties of the formed parts or the components.

Further, during the additive manufacturing process, through a numerical control system or a robot system of the manufacturing equipment, and an inverse device and a defect detection device connected with the manufacturing equipment, inversely calculating the shape and size of the formed body in parallel, and performing internal and external defect detection on blind areas which are complex in shape and are difficult to perform defect detection after the complete of forming.

Further, a powder feeder made from gradient functional materials and a plasma fused deposition gun with a transfer arc current of 170 A are adopted, a micro roll is fixed on a wrist of an industrial robot, the wrist of the industrial robot keeps synchronized with the numerical control plasma fused deposition gun which is used in fused deposition modeling, a side vertical roll follows a side of a melt softening zone, a perforated horizontal roll flexibly tracks a semi-solidified softened area near a back of a molten pool. According to a digital fused deposition modeling path obtained from a three-dimensional CAD model with gradient functional material composition distribution information, nickel-aluminum intermetallic compound powders and nickel-based superalloy powders are used, plasma fused deposition modeling and micro-excrusion forming are performed simultaneously layer by layer on the part made from functionally gradient materials. Because the gradient functional material is prone to crack, the shape and size of the formed body are reversed calculated in parallel during the additive manufacturing process by using an inverse device and a defect detection device, and then detected. If there are defects, a material reduction system is used to remove the defects and then forming is continued. Or blind areas with complex shapes, that are difficult to be performed defect inspection after completing the forming, are performed defect inspection. If there are defects, the material reduction system is used to remove the defects and then forming is continued. Or after completing the forming, the same reverse inspection method is adopted at the same station in the manufacturing equipment to complete the defect detection of parts.

In general, compared with the prior art, the above technical solutions provided by the present invention can achieve beneficial effects as follows. During processing, the position of the part to be processed is unchanged, different processes on different processing layers or the same processing layer are implemented, thereby realizing the one-step high-precision and high-performance additive manufacturing which has the ultra-short process. Moreover, the processing precision of the present invention is high, the part is able to be directly applied. The method provided by the present invention has strong practical application value.

In the present invention, in order to improve the efficiency and reduce the cost, according to the requirements on the performance, size, and surface precision of the parts, if the two of the above-mentioned forming processes are performed simultaneously, the requirements can be met. For example, for the manufacture of valve body castings, a solid-state laser with a power of 2500 W is used and the wear-resistant alloy wire is used as the forming material. During the laser fuse additive forming process, synchronous and follow-up milling are performed through laser or electrical machining or ultrasound. If the milling amount is large, or the precision requirements are not met, or the cost is high and the efficiency is low, mechanical milling or grinding finishing can be used till the precision requirements of the parts are met.

### DETAILED DESCRIPTION OF THE PREFERRED EMBODIMENT

In order to make the objectives, technical solutions, and advantages of the present invention clearer, the present invention will be further described in detail with reference to the embodiments as follows. It should be understood that the specific embodiments described herein are only used to explain the present invention and are not intended to limit the present invention. In addition, the technical features involved in the various embodiments of the present invention described below can be combined with each other as long as they do not conflict with each other.

The present invention provides a method for controlling deformation and precision of a part in parallel during an additive manufacturing process, which comprises steps of: performing additive forming and isomaterial shaping or plastic forming, and simultaneously, performing one or more members selected from a group consisting of isomaterial orthopedic process, subtractive process and finishing process in parallel at the same station, so as to achieve the one-step ultra-short process, high-precision and high-performance additive manufacturing. Performing in parallel at the same station refers to simultaneously implement different processes in the same pass or different passes of different processing layers or the same processing layer when the clamping position of the part to be processed is unchanged.

In the additive manufacturing process, since the additive forming process and the isomaterial shaping process occur in parallel in the same pass, in the fresh solidification zone of the molten pool, dynamic recrystallization can be generated with only a small pressure, thereby forming equiaxed fine grains in the hot forged state; the isomaterial orthopedic process is generally performed in parallel in the same pass or in the same layer or in different layers during the forming process.

The method further comprises a step of performing followed-up controlled rolling and controlled cold heat treatment for controlling deformation and improving performance, so that through controlling process parameters such as temperature, degree of deformation, rate of deformation, and cooling conditions during the plastic forming, mechanical properties of a formed body are improved, the residual stress and deformation are reduced, and the forming precision is improved.

Because the processes are performed in parallel at the same station, the shaping process of the same part immediately follows the additive forming process and occurs in the same pass of the same layer; the temperature is high and there are metal splashes. It is generally considered that the shaping mechanism needs heat resistance, cooling performance, anti-metal sputtering pollution, etc., which causes that it is difficult for device manufacturing and plastic deformation controlling. At the same part of the component, the isomaterial shaping is performed after the complete of additive forming. However, in fact, at the same time in time, all of the additive forming process, the isomaterial shaping process or the plastic forming process, and the isomaterial orthopedic process performed when necessary are simultaneously carried out, but only at different positions of the part.

Further, the subtractive process or the finishing process is specifically simultaneous and follow-up milling by laser, electromachining or ultrasound.

It is generally considered that mechanical milling is an effective finishing method, but because it is a contact type and requires force, machine-type software and hardware systems are required. The numerical control system is unable to perform milling machining in parallel when the additive manufacturing equipment performs additive forming, isomaterial shaping and isomaterial orthopedic, and only the milling can be performed after these processes are completed; or a numerical control system is added, which will reduce the forming efficiency; and adding the numerical control system and transmission system will increase the cost and equipment complexity. In addition, the milling process is thermal and dry milling, which is very difficult and consumes tools. The contactless method such as laser has simple galvanometer mechanism and control, which can be performed in parallel with the above forming process in the same pass or the same layer or different layers.

Further, in the interval between the additive forming process of different processing layers, surface defects in the fused deposition modeling zone are cleaned up in a follow-up cleaning manner, so as to obtain a substrate surface or a part surface with good quality which is conducive to high-quality fused deposition modeling of a next pass.

It is generally considered that while resurfacing welding in the atmosphere, oxides on the surface of the welding layer will float to the surface during the next welding and are generally not cleaned. However, additive forming is multi-layer forming, and the surface layer is repeatedly oxidized and contaminated, which may affect the performance of the formed body. For part manufacturing that requires high toughness and fatigue performance such as aerospace, follow-up cleaning methods that can be performed in parallel with the above-mentioned forming processes without reducing efficiency are required.

Further, the method further comprises after performing additive forming, plastic forming or isomaterial orthopedic process, in the forming processing unit, performing heat treatment on the formed body or the part, so as to remove residual stress thereof, reduce deformation and cracking, and improve mechanical properties. This heat treatment does not cause the part to melt, and has low temperature, which is mainly used to remove residual stress, and reduce deformation and cracking.

It is generally considered that for the additive formed part, which is formed by resurfacing welding, the formed part should be removed from the manufacturing unit after the complete of forming and is subjected to heat treatment such as stress relief annealing to eliminate residual stress and deformation, and prevent the parts which are difficult to be formed from cracking. However, these processes will affect the forming processing precision and manufacturing efficiency. Therefore, in view of the low temperature of the stress relief annealing heat treatment, the heat treatment device is installed in the manufacturing unit, so that the manufacturing efficiency is not reduced, and the final finishing process can be performed after the heat treatment, thereby obtaining ultra-short process high-precision high-performance additive manufacturing.

Further, the method further comprises through using a numerical control system of the manufacturing equipment, and an inverse device and a defect detection device connected with the manufacturing equipment, inversely calculating the shape and size of the formed body in parallel, and performing internal and external defect detection on blind areas which are complex in shape and are difficult to perform defect detection after the complete of forming; when there are defects, removing the defects with a reduction system and then continuously forming.

It is generally considered that traditional manufacturing is to detect the defects of the formed parts. However, if the defects of the parts exceed the standard after the defect detection, the parts can only be scrapped. In addition, during the detection process, some parts have complex shapes, and some parts may not be detected, so that a detection dead zone is formed. Therefore, the detection during the forming process will not be limited by the detection dead zone.

In order to explain the method in detail, the present invention is described with reference to specific embodiments as follows.

### First Embodiment:

A plasma fused deposition gun using gas tungsten arc welding (laser, gas metal arc welding, gas tungsten arc welding and electron beam) is adopted as a heat source for additive forming, a micro roll moves synchronously with the plasma fused deposition gun, the micro roll for isomaterial shaping is applied to a surface of a fresh post-solidification zone of a molten pool. A fused deposition current of the plasma fused deposition gun is 180 A. According to performance requirements of a forging mold cavity to be fused and deposited, a mold steel welding wire is used, fused deposition modeling and plastic forming are performed simultaneously layer by layer in accordance with a digital forming processing path obtained from a three-dimensional CAD (computer-aided design) model of the mold on a substrate. If the shape of the mold cavity is complex, it is necessary to perform contactless laser milling on the surface of the formed body to be processed during the above-mentioned synchronous forming process. If during the above-mentioned synchronous forming process, the size and surface precision of the formed body still cannot meet the requirements due to the short time, mechanical finishing is able to be performed by segmented composition of several layers. The finishing process is synchronized with the synchronous forming process (that is, implementation in parallel at the same station) till the complete of mold cavity forming.

### Second Embodiment:

A plasma fused deposition gun using gas tungsten arc welding is adopted as a heat source for additive forming, a micro roll moves synchronously with the plasma fused deposition gun, the micro roll for isomaterial shaping is applied to a surface of a fresh post-solidification zone of a molten pool. A fused deposition current of the plasma fused deposition gun is 180 A. According to the performance requirements of a mold cavity for a sheet metal forming to be fused and deposited, a mold steel wire is used, laser fused deposition modeling and plastic forming are performed simultaneously layer by layer in accordance with a digital forming processing path obtained from a three-dimensional CAD model of the mold on a substrate. In order to control deformation and improve performance, a follow-up controlled rolling and controlled cold heat treatment process is used; during the process of additive forming and thermoforming (plastic forming), air cooling is changed to liquid nitrogen cooling to increase a cooling rate, thereby improving the strength and hardness of the mold. Or during the forming process, electromagnetism is applied to a molten pool for auxiliary forming, so as to improve microstructure and properties and reduce residual stress. The above process is synchronized with the forming process, that is, parallel implementation at the same station, till the complete of mold cavity forming.

### Third Embodiment:

A gas-protected laser fused deposition modeling gun is adopted as a heat source for additive forming, a micro roll moves synchronously with the gas-protected laser fused deposition modeling gun, impact forming laser for plastic forming is applied to a surface of a post-solidification zone of a molten pool. A power of the gas-protected laser fused deposition modeling gun is 2000 W. According to the performance requirements of an aircraft engine case to be additively manufactured, a superalloy wire is used, fused deposition modeling and micro-plastic forming are performed simultaneously layer by layer in accordance with a digital forming processing path obtained from a three-dimensional CAD model of the part on a substrate. Due to the large size of the frog, the deformation of fused deposition modeling is large. Therefore, the isomaterial orthopedic forming needs to be performed after the synchronous forming described above. This isomaterial orthopedic forming is performed followed by the laser impact forming till the complete of part forming, so as to correct the deformation to the minimum. Or ultrasonic vibrations are applied to a formed area for auxiliary forming during the forming process, so as to improve microstructure and properties, and reduce residual stress. If the shape of the part is complex, it is necessary to perform contactless laser milling during the above-mentioned synchronous forming process or perform mechanical finishing by segmented composite of several layers on the part that are difficult to be processed after forming. The finishing process is synchronized with the synchronous forming process, that is, both of them are implemented in parallel at the same station, till the complete of part forming.

### Fourth Embodiment:

A gas-protected laser fused deposition modeling gun is adopted as a heat source for additive forming, a micro roll moves synchronously with the gas-protected laser fused deposition modeling gun, the micro roll for isomaterial shaping is applied to a surface of a fresh post-solidification zone of a molten pool. A fused deposition current of the gas-protected laser fused deposition modeling gun is 200 A and a laser power thereof is 2000 W. According to the performance requirements of an aircraft frame beam to be additively manufactured, a titanium alloy welding wire is used, fused deposition modeling and micro-plastic forming are performed simultaneously layer by layer in accordance with a digital forming processing path obtained from a three-dimensional CAD model of the part on a substrate. Due to the large size of the aircraft frame beam, the deformation of fused deposition modeling is large. Therefore, the isomaterial orthopedic forming needs to be performed after the synchronous forming described above. This isomaterial orthopedic forming is performed followed by the micro-plastic forming till the complete of part forming, so as to correct the deformation to the minimum. However, due to the high performance requirements of aeronautical parts, oxides and impurities on the surface of each layer are not allowed to be brought into a lower forming body. Therefore, oxides, impurities and defects on the surface of the fused deposition modeling zone during additive forming are required to be cleaned up in a high-efficiency follow-up cleaning manner, so as to obtain a substrate surface or a part surface with good quality which is conducive to high-quality fused deposition modeling of a next pass. The surface cleaning is synthesized with the forming process (that is, implementation in parallel at the same station) till the complete of part forming.

### Fifth Embodiment:

A solid-state laser with a power of 2000 W is adopted, a superalloy wire is used as a forming material, a micro roll fixed on a laser head moves synchronously with the laser head, a side vertical roll follows a side of a melt softening zone, a perforated horizontal roll flexibly tracks a semi-solidified softened area near a back of a molten pool; according to a digital forming processing path obtained from a three-dimensional CAD model of oil pipe fittings on a substrate, laser fused deposition modeling and micro-forced forming are performed simultaneously on superalloy parts layer by layer, that is, parallel implementation at the same station. A heat treatment device located in a forming processing unit is used to perform heat treatment on the formed parts or components after the completion of all forming processes to remove residual stresses of the formed parts or components, reduce deformation and cracking, and improve mechanical properties of the formed parts or the components.

### Sixth Embodiment:

A powder feeder made from functionally gradient materials and a plasma fused deposition gun with a transfer arc current of 170 A are adopted, a micro roll is fixed on a wrist of an industrial robot, the wrist of the industrial robot keeps synchronized with the numerical control plasma fused deposition gun which is used in fused deposition modeling, a side vertical roll follows a side of a melt softening zone, a perforated horizontal roll flexibly tracks a semi-solidified softened area near a back of a molten pool. According to a digital fused deposition modeling path obtained from a three-dimensional CAD model with gradient functional material composition distribution information, nickel-aluminum intermetallic compound powders and nickel-based superalloy powders are used, plasma fused deposition modeling and micro-excrusion forming are performed simultaneously layer by layer on the part made from gradient functional materials. Because the gradient functional material is prone to crack, the shape and size of the formed body must be reversed in parallel during the additive manufacturing process by using a reverse device and a defect detection device, and then detected. If there are defects, a material reduction system is used to remove the defects and then forming is continued. Or blind areas with complex shapes, that are difficult to be performed defect inspection after completing the forming, are performed defect inspection. If there are defects, the material reduction system is used to remove the defects and then forming is continued, that is, parallel implementation at the same station. Or after completing the forming, the same reverse inspection method is adopted at the same station in this manufacturing equipment to complete the defect detection of parts.

In order to explain the technical effects of the present invention in detail, the present invention is further described with specific experiments as follows.

First Experiment: Medium carbon steel engine transition section during micro-casting, forging and milling (additive, isomaterial, subtractive) composite manufacturing process

The weldability of medium carbon steel is extremely poor, and there is no international precedent for 3D printing; the tensile stress in width and depth directions of the deformed microdomain is changed to the compressive stress. Defects such as cracks are reduced, residual stress is reduced by 70% and deformation is reduced. Columnar crystals become ultrafine equiaxed crystals. The performance significantly exceeds traditional forgings. The medium carbon steel engine transition section passes aero engine standard X-ray internal defect detection. Medium carbon steel as-cast column / dendritic obtained by single arc forming, grade 7-8 equiaxed coarse crystals obtained by traditional forging, and 12-level ultrafine equiaxed crystals obtained by micro-casting and forging composite are contrasted. The X-ray detection is performed on the medium carbon steel engine transition section, and there is no defect.

**Table 1 Test results of mechanical properties of medium carbon steel engine transition section (30% reduction)**

| Performance Method | | Tensile strengh σb/M Pa | Elongation δ/(%) | Shrinkage ψ/(%) | Impact Toughness/(J·mm⁻²) | Hardness/(HBS) |
|---|---|---|---|---|---|---|
| Casting | Aviation standards | 540 | 12 | 20 | 29.4 | 152-170 |
| Forging | National Standard GB 5024-77 | 835 | 10 | 40 | 36.9 | 229-285 |
| Present Invention | Longitudinal Direction | 963 | 18 | 60 | 47.5 | 301-308 |
| | Tangential Direction | 982 | 12 | 43 | 43.5 | 307-324 |

Second Experiment: Through the experiment, micro-casting and forging (additive, isomaterial) composite forming TC4 titanium alloy microstructure and properties as-cast pillars / dendritic crystals are changed into forged equiaxed crystals, the performance exceeds forgings.

Third Experiment: Through the experiment, superalloy In718 grain structure is obtained through micro-casting and forging forming (30% deformation).

Fourth Experiment: Through the experiment, the energy consumption and material consumption of aircraft landing gears manufactured by traditional process and micro casting forging composite process are compared, as shown in Table 2.

**Table 2 Comparison of Energy Consumption and Material Consumption of Aircraft Landing Gears Manufactured by Traditional Process and Micro Casting Forging Composite Process**

| Comparison Items | Blank Quality | Material Utilization | Manufacturing Cycle |
|---|---|---|---|
| Traditional Process | 800 kg | 10% | 3-6 months |
| Micro Casting Forging Composite Process | 120 kg | 68% | 3-6 weeks |

**Table 3 Comparison of Energy Consumption between Micro Casting Forging Milling Process and Traditional Process**

| | | | | |
|---|---|---|---|---|
| Traditional Process | Casting (kj) | Forging (kj) | Milling (kj) | Total (kj) |
| | 9.37×10⁶ | 8.64×10⁷ | 3.2×10⁵ | 9.6×10⁷ |
| Micro Casting Forging Milling Process | Micro Casting | Micro Forging | Micro Milling | Total (kj) |
| | 1.06×10⁶ | 4.5×10⁵ | 2.3×10⁴ | 1.5×10⁶ |

Referring to Table 3, in the micro forging process, 4.5 × 105 kj of energy is consumed and less than 1 ton of micro forging pressure is used instead of the traditional 10,000-ton forging pressure, and the energy consumption is less than 10% of the traditional forging.

Through the above experiments, it can be seen that in the method provided by the present invention, the super high strength steel material utilization is 6.8 times higher than that of traditional manufacturing; the energy consumption is reduced by 90%, which will significantly improve the energy consumption structure. The present invention breaks through the performance bottleneck, has high strength, high toughness, high performance reliability and uniform forged ultrafine equiaxed crystal structure, and fully meets the need for weight loss in high-end fields such as large aircrafts. The present invention has an ultra-short process. Casting-forging-welding-milling multiple processes are integrated into one manufacturing unit, so that a new model of directly manufacturing high-end parts with one device is established, which achieves parallel control of part shape and performance and reduces manufacturing cycles and processes by more than 60%. The present invention has the advantages of high efficiency and low cost, transforming the traditional manufacturing mode of high energy consumption materials and heavy pollution, saving more than 90% of energy consumption and realizing transformative green manufacturing. According to the present invention, "design-monitor-control-repair" are integrated manufactured. A series of large-scale equipment for large-scale complex melt-forging-milling composite ultra-short process manufacturing is developed.

## Claims

1. A method for controlling deformation and precision of a part in parallel during an additive manufacturing process, which comprises steps of: performing additive forming and isomaterial shaping or plastic forming, and simultaneously, performing one or more members selected from a group consisting of isomaterial orthopedic process, subtractive process and finishing process in parallel at a same station, so as to achieve a one-step ultra-short process, high-precision and high-performance additive manufacturing, wherein:
performing in parallel at the same station refers to simultaneously implement different processes in a same pass or different passes of different processing layers or a same processing layer when a clamping position of the part to be processed is unchanged.

2. The method as recited in claim 1, further comprising a step of performing followed-up controlled rolling and controlled cold heat treatment for controlling deformation and improving performance, so that through controlling process parameters such as temperature, degree of deformation, rate of deformation, and cooling conditions during the plastic forming, or supplemented by electromagnetism or ultrasonic vibration, crystalline morphologies and mechanical properties of a formed body are improved, residual stress and deformation are reduced, and a forming precision is improved.

3. The method as recited in claim 2, wherein: the subtractive process or the finishing process is specifically simultaneous and follow-up milling by laser, electromachining or ultrasound; if the precision does not meet requirements of the part, mechanical milling or grinding finishing is performed till the precision meets the requirements of the part.

4. The method as recited in claim 3, wherein: in different passes, or in an interval between the additive forming process of different passes of different processing layers or a same processing layer, oxides, impurities and defects on a surface of a fused deposition modeling zone are cleaned up in a follow-up cleaning manner during the additive forming process, so as to obtain a substrate surface or a part surface with good quality which is conducive to high-quality fused deposition modeling of a next pass.

5. The method as recited in claim 4, further comprising after performing additive forming, plastic forming or isomaterial orthopedic process, in a forming processing unit, performing heat treatment on the formed body or the part, so as to remove residual stress thereof, reduce deformation and cracking, and improve mechanical properties.

6. The method as recited in claim 5, further comprising detecting the defects which comprises through using a numerical control system of a manufacturing equipment, and an inverse device and a defect detection device connected with the manufacturing equipment, inversely calculating a shape and a size of the formed body in parallel, and performing internal and external defect detection on blind areas which are complex in shape and are difficult to perform defect detection after a complete of forming; when there are defects, removing the defects with a reduction system and then continuously forming, wherein after completing the forming, a defect detection on the part at the same station in the manufacturing equipment is performed.

7. The method as recited in one of the preceding claims, wherein different processes are implemented at different positions in the same pass or different passes of different processing layers or the same processing layer.

8. The method as recited in one of claims 2 to 6, wherein: the process parameters comprising temperature, degree of deformation, rate of deformation, and cooling conditions during the plastic forming process are controlled, which is assisted by electromagnetic or ultrasonic vibration;
a plasma fused deposition gun using gas tungsten arc welding is adopted as a heat source for additive forming, a micro roll moves synchronously with the plasma fused deposition gun, the micro roll for plastic forming is applied to a surface of a fresh post-solidification zone of a molten pool in situ; a fused deposition current of the plasma fused deposition gun is 180 A; according to performance requirements of a forging mold cavity to be fused and deposited, a mold steel welding wire is used, micro-casting fused deposition additive forming and micro-forging plastic forming are performed simultaneously layer by layer in accordance with a digital forming processing path obtained from a three-dimensional CAD (computer-aided design) model of the mold on a substrate; through the follow-up controlled rolling and controlled cold heat treatment, in the process of additive forming and plastic forming, air cooling is changed to gas cooling or liquid nitrogen cooling; or in the forming process, electromagnetism is applied to the molten pool for auxiliary forming; if the shape of the mold cavity is complex, it is necessary to perform contactless laser milling on the surface of the formed body to be processed during the above-mentioned synchronous forming process; if during the synchronous forming process, the size and surface precision of the formed body are still unable to meet the requirements due to a short time, mechanical finishing is able to be performed in a manner of layer by layer or segmented composition of several layers; the finishing process is synchronized with the synchronous forming process till a complete of mold cavity forming.

9. The method as recited in one of claims 3 to 6, wherein: if the precision does not meet the requirements, mechanical milling or grinding finishing is able to be continuously adopted till the precision of parts meet the requirement.

10. The method as recited in one of claims 4 to 6, wherein: a gas-protected laser fused deposition gun is adopted as a heat source for additive fused deposition forming, a micro roll moves synchronously with the gas-protected laser fused deposition gun, impact forming laser for plastic forming is applied to a surface of a post-solidification zone of a molten pool; a power of the gas-protected laser fused deposition gun is 2000 W; according to performance requirements of an aircraft engine case to be additively manufactured, a superalloy wire is used, fused deposition modeling and micro-plastic forming are performed simultaneously layer by layer in accordance with a digital forming processing path obtained from a three-dimensional CAD model of parts on a substrate; due to a large size of the case, the deformation of fused deposition modeling is large, so that the isomaterial orthopedic process needs to be performed after the synchronous forming process; the isomaterial orthopedic process is performed followed by the laser impact forming till the complete of part forming so as to correct the deformation to the minimum; or ultrasonic vibrations are applied to a formed area for auxiliarily forming during the forming process so as to improve microstructure and properties and reduce residual stress; if the shape of the component is complex, it is necessary to perform contactless laser milling during the synchronous forming process, or perform intermittent contact ultrasonic machining, or perform the above process or mechanical finishing in a manner of segmented composition of several layers on the parts that are difficult to be processed after the whole forming; the finishing process is synchronized with the synchronous forming process till the complete of part forming.

11. The method as recited in claim 5 or 6, wherein: a composite of electric arc or plasma arc of a gas tungsten arc welding gun and laser is adopted as a heat source for additive forming, a micro roll moves synchronously with a composite heat source generator, the micro roll for isomaterial shaping is applied to a surface of a post-solidification zone of a molten pool; a fused deposition current of the gas-protected electric arc or plasma arc fused deposition gun is 200 A and a laser power thereof is 2000 W; according to the performance requirements of an aircraft frame beam to be additively manufactured, a titanium alloy welding wire is used, fused deposition modeling and micro-plastic forming are performed simultaneously layer by layer in accordance with a digital forming processing path obtained from a three-dimensional CAD model of parts on a substrate; due to a large size of the aircraft frame beam, the deformation of fused deposition modeling is large, so that the isomaterial orthopedic process needs to be performed after the synchronous forming process, the isomaterial orthopedic process is performed followed by the micro-plastic forming till the complete of part forming so as to correct the deformation to the minimum; however, due to high performance requirements of aeronautical parts, oxides and impurities on a surface of each layer are not allowed to be brought into a lower forming body, so that oxides, impurities and defects on the surface of the fused deposition modeling zone during additive forming are required to be cleaned up in a high-efficiency follow-up cleaning manner, so as to obtain a substrate surface or a part surface with good quality which is conducive to high-quality fused deposition modeling of a next pass; the surface cleaning is synthesized with the forming process till the complete of part forming;
a solid-state laser with a power of 2000 W is adopted, a superalloy wire is used as a forming material, a micro roll fixed on a laser head moves synchronously with the laser head, a side vertical roll follows a side of a melt softening zone, a perforated horizontal roll flexibly tracks a semi-solidified softened area near a back of a molten pool; according to a digital forming processing path obtained from a three-dimensional CAD model of oil pipe fittings on a substrate, laser fused deposition modeling and micro-forced forming are performed simultaneously on superalloy parts layer by layer; a heat treatment device located in a forming processing unit is used to perform heat treatment on the formed parts or components after the complete of all forming processes, so as to remove residual stresses, reduce deformation and cracking, and improve mechanical properties of the formed body or part.

12. The method as recited in claim 6, wherein: during the additive manufacturing process, through a numerical control system or a robot system of the manufacturing equipment, and an inverse device and a defect detection device connected with the manufacturing equipment, inversely calculating the shape and size of the formed body in parallel, and performing internal and external defect detection on blind areas which are complex in shape and are difficult to perform defect detection after the complete of forming.

13. The method as recited in claim 6 or 12, wherein: a powder feeder made from functionally functional materials and a plasma fused deposition gun with a transfer arc current of 170 A are adopted, a micro roll is fixed on a wrist of an industrial robot, the wrist of the industrial robot keeps synchronized with the numerical control plasma fused deposition gun which is used in fused deposition modeling, a side vertical roll follows a side of a melt softening zone, a perforated horizontal roll flexibly tracks a semi-solidified softened area near a back of a molten pool; according to a digital fused deposition modeling path obtained from a three-dimensional CAD model with gradient functional material composition distribution information, nickel-aluminum intermetallic compound powders and nickel-based superalloy powders are used, plasma fused deposition modeling and micro-excrusion forming are performed simultaneously layer by layer on the part made from the functionally gradient materials; because the gradient functional material is prone to crack, the shape and size of the formed body are reversed calculated in parallel during the additive manufacturing process by using an inverse device and a defect detection device, and then detected; if there are defects, a material reduction system is used to remove the defects and then forming is continued; or blind areas with complex shapes, that are difficult to be performed defect inspection after completing the forming, are performed defect inspection; if there are defects, the material reduction system is used to remove the defects and then forming is continued; or after completing the forming, the same reverse inspection method is adopted at the same station in the manufacturing equipment to complete the defect detection of parts.
